# FASCICULE DE BREVET EUROPEEN

(11) **EP 1 151 870 B1**
(45) Date de publication et mention de la délivrance du brevet: **03.08.2005**
(21) Numéro de dépôt: 00870092.4
(22) Date de dépôt: 03.05.2000
(51) Int. Cl.: B41M 3/14, B42D 15/00, G06K 19/16, G06K 19/06

(54) **Dispositif antifraude pour document**
Vorrichtung zum Fälschungsschutz von Dokumenten
Anti-fraud device for document

(43) Date de publication de la demande: 07.11.2001
(73) Titulaire: BANQUE NATIONALE DE BELGIQUE S.A., B-1000 Bruxelles (BE)
(72) Inventeur: Salade, Marc, 1490 Court-Saint-Etienne (BE); Veldeman, François, 1330 Rixensart (BE)
(74) Mandataire: Vandeberg, Marie-Paule L.G.

(56) Documents cités:
- EP-A- 0 889 446
- WO-A-98/40223
- US-A- 4 402 150
- US-A- 4 892 336
- US-A- 5 695 346
- US-A- 5 943 131

## Description

L'invention concerne les procédés et dispositifs visant à empêcher la fabrication et l'écoulement de documents frauduleux, dans le domaine notamment du papier-monnaie, des bons, des titres, des cartes de crédit, etc.

Des procédés et dispositifs sans cesse plus complexes sont utilisés pour décourager les fraudeurs et les faux-monnayeurs.

Pour un oeil exercé, l'examen visuel est toujours une première barrière efficace pour repérer les falsifications, en dépit de la multiplication de moyens de reproduction.

Cependant, dans certaines transactions, notamment aux heures d'affluence, aux caisses de supermarché, etc., le temps d'examen des documents, nécessairement très court, ne permet d'éliminer que les faux assez grossiers.

L'impression de billets comportant des zones imprimées avec des encres contenant des pigments réagissant aux ultraviolets (émis par exemple par une lampe de Wood) est une méthode permettant un contrôle aisé et rapide.

Dans des banques, offices de change et supermarchés, de nombreux postes sont d'ailleurs équipés d'une zone de contrôle mettant en évidence les zones imprimées fluorescentes.

Cependant, certains fraudeurs arrivent à obtenir des substituts trompeurs de cet effet fluorescent, d'où un risque effectif que l'opérateur se laisse abuser par une impression «globale» satisfaisante, en dépit de l'inadéquation manifeste des couleurs et/ou des motifs.

Ce phénomène n'est pas lié à un manque d'attention de la personne effectuant le contrôle : outre le faible éclairement nécessaire à la mise en évidence de la fluorescence, l'oeil humain travaille là dans des conditions anormales, sans points de repère familiers (couleurs, position, forme).

En outre, l'état des documents examinés vu leurs conditions de manipulation, entraîne des fausses alertes fréquentes.

On a donc cherché un procédé de contrôle rapide ne présentant pas les inconvénients décrits ci-dessus.

Le but de l'invention est de rétablir la confiance du public notamment dans la monnaie-papier, par la mise sur le marché d'un procédé de contrôle rapide et fiable de l'authenticité de documents.

Un autre but de l'invention est un procédé mettant la falsification de documents protégés hors de portée de la majorité des fraudeurs.

On connaît notamment par US 5 695 346 un procédé d'impression dans lequel deux motifs imprimés sont partagés suivant un pas déterminé en minces bandes et imprimés côte à côte en alternant les bandes de l'un et de l'autre motif.

Le motif « dual » obtenu est recouvert d'une couche transparente réticulée, présentant un réseau dont le pas correspond à celui du partage des motifs, ce qui permet d'observer, suivant l'angle d'observation, un seul de ces deux motifs.

Un tel procédé est utilisé depuis longtemps pour créer un effet de relief, des images changeantes (notamment des cartes postales), etc.

Ce procédé visuel a cependant été abandonné comme peu efficace pour l'authentification de documents dans le domaine du papier-monnaie, etc., en raison de sa dégradation rapide. En outre, la couche réticulée est relativement épaisse et se sépare facilement de son support. Par ailleurs, bien que d'un emploi délicat, l'apposition d'une telle couche ne serait pas a priori un obstacle suffisant pour des fraudeurs bien équipés.

On connaît par ailleurs l'emploi d'encres à pigments photochromiques, dont la couleur change de façon réversible sous l'action de la lumière. Cette propriété permet de repérer des faux documents lors d'examens approfondis. Le retour très graduel des pigments vers leur couleur d'origine et le niveau variable de la lumière ambiante ne permet cependant pas d'exploiter cette propriété lors d'une transaction rapide.
L'objet de l'invention est un dispositif antifraude pour document comprenant un support et au moins deux motifs apposés sur ledit support, ces motifs étant partagés en bandes suivant un pas déterminé, les dites bandes étant disposées côte à côte en alternance ; une couche transparente réticulée à effet optique, de pas correspondant à celui des bandes, est apposée sur ces au moins deux motifs. Du fait de ses caractéristiques physiques, cette couche laisse apparaître, suivant l'angle d'observation, un seul de ces au moins deux motifs ; suivant l'invention, les encres utilisées pour réaliser ces au moins deux motifs contiennent des pigments fluorescents ou photochromiques et la couche est transparente au rayonnement activant ces pigments, soit respectivement aux ultraviolets ou à la lumière visible, si bien que lorsque le dispositif est soumis à un rayonnement U.V. et/ou lumineux à haute intensité, ces au moins deux motifs donnent sous au moins deux angles différents des images dissemblables par la forme, la dimension et/ou la couleur, éventuellement contenant une information exploitable pour la vérification du document.

Combinant différentes technologies tout en étant simple à mettre en oeuvre, le dispositif de l'invention met hors de portée des fraudeurs, et surtout des fraudeurs occasionnels, la réalisation de documents falsifiés d'aspect convaincant.

Suivant une forme de réalisation avantageuse, la surface extérieure de la couche réticulée présente des reliefs à section prismatique ; elle peut aussi présenter des reliefs à section lenticulaire, faisant effet de loupe. Cette couche réticulée peut être obtenue par estampage à chaud d'un matériau polymère transparent au rayonnement activant ces pigments, soit à la lumière visible et/ou aux rayons UV.

Les motifs apposés sur le support peuvent être formés notamment de bandes parallèles ou de bandes concentriques.

Un autre objet de l'invention est un lecteur optique pour un dispositif tel que décrit ci-dessus, qui comprend :
- une chambre,
- une source de rayonnement U.V. et/ou lumineux à haute intensité,
- un plan de référence disposé en regard de la source de rayonnement,
- des moyens de repérage de position,
- un système de détection optique sensible au rayonnement correspondant à la longueur d'onde émise par les pigments fluorescents ou photochromiques, comprenant au moins un détecteur optique, disposé de façon à capter le dit rayonnement sous des angles appropriés lorsqu'un support muni du dispositif est placé en position adéquate dans le plan de référence.

Le système de détection optique comprend avantageusement au moins deux détecteurs optiques ; il peut également faire appel à des dispositifs de renvoi optique tels que des miroirs ou autres.

L'invention a également pour objet un procédé d'authentification de document qui comprend les opérations suivantes :
- élaborer au moins deux motifs,
- partager ces au moins deux motifs en bandes suivant un pas déterminé,
- imprimer en alternance des bandes formant ces au moins deux motifs sur un support à l'aide d'encres contenant des pigments fluorescents et/ou photochromiques,
- façonner une couche réticulée transparente au rayonnement activant ces pigments, soit à la lumière visible et/ou aux U.V., dotée d'un pas correspondant à celui des bandes de ces au moins deux motifs,
- apposer la couche réticulée sur les au moins deux motifs de façon à laisser apparaître sous un rayonnement approprié, suivant l'angle d'observation, un seul de ces au moins deux motifs,
- soumettre le document ainsi traité à une source de rayonnement U.V et/ou de lumière visible à forte intensité,
- vérifier la présence distincte de ces au moins deux motifs.

La vérification peut s'accompagner au besoin d'une comparaison à des signaux de référence.

Le façonnage de la couche optique est avantageusement réalisé par exemple par estampage, après apposition d'une couche d'un matériau polymère sur le support.

Même en laissant de côté les problèmes liés à l'approvisionnement en encres spéciales etc., le dispositif de l'invention entraîne une série de difficultés fortement accrue pour les candidats fraudeurs.

Un avantage de l'invention est que l'on peut utiliser également des postes de contrôle sous U.V. déjà existants.

Si l'on compare l'effet obtenu avec un document protégé de l'invention lors d'un contrôle visuel en lumière ultraviolette par rapport à celui d'un document «classique» utilisant des pigments U.V., l'opérateur n'est plus confronté à une constellation indistincte de points de contrôle, mais à une configuration à nette transition de couleur et/ou de forme, discernable même en vision périphérique, même si le document est fortement altéré. Les images apparaissant lors du contrôle peuvent en outre contenir des informations codées relatives, par exemple, à la série de production du document.

Lorsque l'on fait usage d'encres à pigments photochromiques, l'usage d'une source à forte intensité (lampe à vapeurs métalliques, flash) procure également une transition sans équivoque, quel que soit le niveau de la lumière ambiante.

Le dispositif ne servant pas à un contrôle visuel primaire, la qualité des images engendrées a relativement peu d'importance, ce qui rend ce type de protection peu sensible à la dégradation.

Outre le fait qu'il facilite un contrôle visuel rapide, le dispositif peut être facilement doublé d'un poste de contrôle, automatisé au besoin. Le dispositif de l'invention est de préférence utilisé en complément d'autres moyens de prévention de la fraude, sans interférer avec ceux-ci.

D'autres particularités et avantages de l'invention ressortiront de la description ci-après de modes de réalisation particuliers de l'invention, référence étant faite aux dessins annexés dans lesquels :
la Fig. 1 est une vue en plan de deux motifs;
la Fig. 2 est encore un plan de l'impression en bandes alternées des deux motifs de la Fig. 1 sur un support;
la Fig. 3 est une vue schématique en coupe d'un document muni du dispositif de l'invention soumis à examen;
la Fig. 4 est une vue schématique en coupe du document de la Fig. 3 placé dans un lecteur optique;

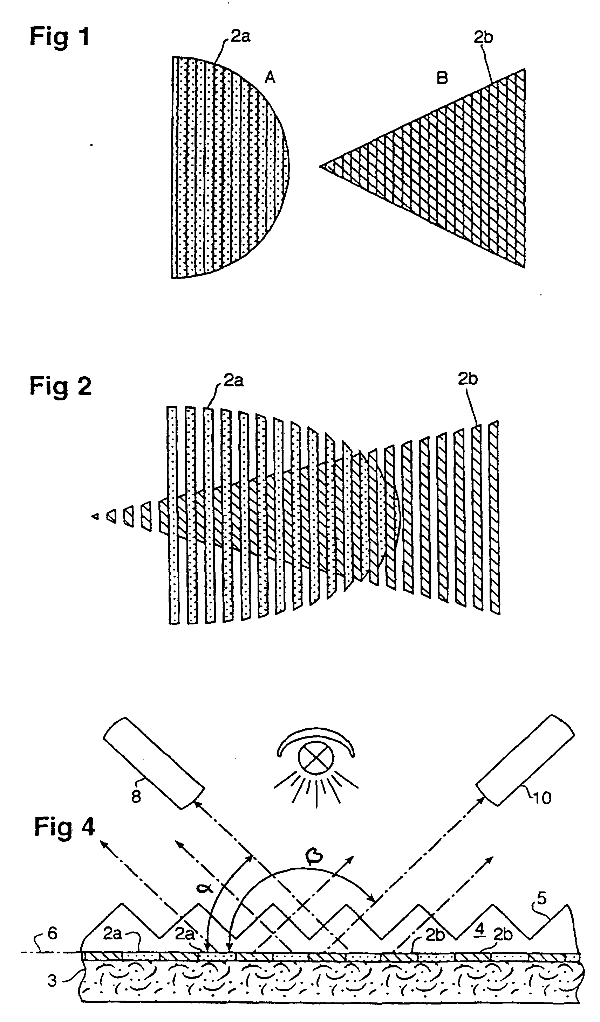

la Fig. 1 montre deux motifs 1A et 1B qui diffèrent ici l'un de l'autre par l'orientation et par la couleur (hachures et pointillés).

Chacun de ces motifs 1A et 1B est divisé en bandes parallèles 2a, 2b suivant un pas identique.

La Fig. 2 montre la façon dont les bandes 2a et 2b formant ces deux motifs sont imprimées sur un support : les bandes respectives de chacun des motifs sont disposées côte à côte en alternance.

Les encres utilisées pour l'impression des deux motifs sont chargées de pigments qui, soumis à l'action d'un rayonnement ultraviolet, émettent un rayonnement dans le visible et/ou de pigments photochromiques, dont la couleur change en fonction de la quantité de lumière reçue.

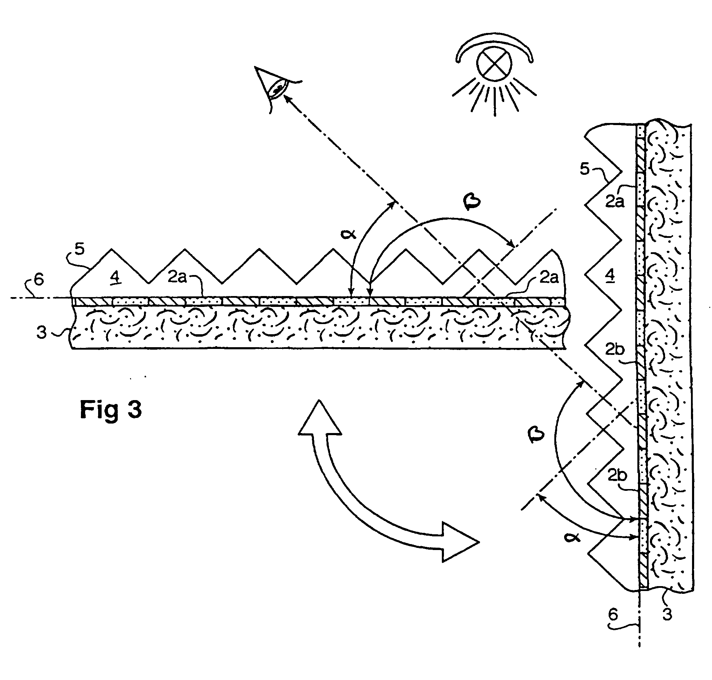

La Fig. 3 illustre, hors d'échelle, le principe de fonctionnement du dispositif.

Le support 3 sur lequel sont imprimées les bandes alternées 2a, 2b est placé dans une chambre éclairée par une source de lumière ultraviolette.

Une couche réticulée 4, constituée ici d'un film en matériau polymère transparent à la lumière visible et aux ultraviolets dont la surface externe présente, en coupe, des reliefs prismatiques 5, est appliquée sur le support 3.

Les reliefs 5 de la couche réticulée 4 se succèdent suivant un pas correspondant à celui des bandes alternées 2a, 2b. Les caractéristiques de la couche réticulée 4 (épaisseur, indice de réfraction, inclinaison des facettes 5) sont calculées de façon à ne laisser percevoir sous un angle déterminé (α ou β), dans les conditions du contrôle qu'un seul des deux motifs 1A ou 1B.

La Fig. 3 illustre le principe du contrôle, tant visuel qu'automatisé, de l'authenticité d'un document.

Le support 3 muni du dispositif est placé dans une zone ou une chambre partiellement occultée et soumise à un rayonnement U.V. ou lumineux intense. Chacun des motifs contrastés 1A, 1B n'étant visible que sous un angle déterminé, un pivotement du plan de référence 6 du document permet à l'opérateur de vérifier sans équivoque l'authenticité du document.

Dans le cas d'encres à pigments photochromiques, la variation de la couleur d'un motif est une fonction de l'énergie apportée sous forme lumineuse aux pigments. Cette énergie peut être apportée par un rayonnement de courte longueur d'onde (et donc, à haute énergie) ou par une exposition intense à un rayonnement moins énergétique. La source utilisée peut être une lampe à vapeurs métalliques ou à décharge (flash).

Dans une version automatisée du même contrôle, représentée à la Fig. 4, on fait appel, plutôt qu'à l'oeil de l'observateur, à deux capteurs optiques 8,10 placés dans la chambre de contrôle sous un angle approprié (α ou β) par rapport au plan de référence 6. Le cas échéant, des recoupements peuvent être faits entre les informations recueillies par les capteurs 8, 10 et d'autres caractéristiques du document. On peut par ailleurs utiliser des dispositifs optiques de renvoi, tels que miroirs, prismes etc.

Il va de soi que plusieurs dispositifs peuvent être apposés sur un même document, et que plusieurs paires de capteurs peuvent être disposées dans la chambre et que l'on peut utiliser les pigments fluorescents et photochromiques ensemble ou distinctement.

Dans les Fig. 1 à 3, le nombre des motifs distincts a été, pour des raisons de clarté, limité à deux, mais il va de soi que le présent principe reste valable si plus de deux motifs sont utilisés. Dans ce cas, la forme de la couche réticulée est adaptée de façon à ce que les N motifs apparaissent de façon distincte sous autant d'angles correspondants sous le rayonnement approprié.

La couche réticulée peut, par ailleurs, être façonnée suivant un relief complexe qui laisse apparaître chacun des motifs sous une pluralité d'angles α et β.

Un moyen de repérage (non représenté), lié éventuellement à un moyen d'entraînement, contrôle la position du document par rapport aux capteurs.

Le lecteur optique peut, de même, être muni, en fonction des critères énoncés ci-dessus, de plus de deux capteurs.

Chaque motif ou leur combinaison peut, en outre, servir de support à un code (tel qu'un code barre) propre au document ou, par exemple, à sa série de fabrication.

## Revendications

1. Dispositif antifraude pour document comprenant
- un support,
- au moins deux motifs apposés sur ledit support, ces motifs étant partagés en bandes suivant un pas déterminé, les dites bandes étant disposées côte à côte en alternance,
- une couche transparente réticulée, présentant un pas correspondant au précédent, apposée sur ces au moins deux motifs, de forme telle qu'elle laisse apparaître, suivant l'angle d'observation, un seul de ces au moins deux motifs,
**caractérisé en ce que -** les encres utilisées pour réaliser ces au moins deux motifs contiennent des pigments fluorescents ou photochromiques,
- la couche réticulée est transparente au rayonnement activant ces pigments
- lorsque le dispositif est soumis à un rayonnement UV ou visible à forte intensité ces au moins deux motifs donnent sous au moins deux angles différents des images dissemblables par la forme, la dimension et/ou la couleur.

2. Dispositif antifraude suivant la revendication 1 **caractérisé en ce que** la surface extérieure de la couche transparente réticulée présente des reliefs à section prismatique.

3. Dispositif antifraude suivant la revendication 1 **caractérisé en ce que** la surface extérieure de la couche présente des reliefs à section lenticulaire.

4. Dispositif antifraude suivant les revendications 1 et 2 **caractérisé en ce que** la forme de la couche réticulée est obtenue par estampage à chaud.

5. Dispositif suivant l'une quelconque des revendications précédentes **caractérisé en ce que** le au moins un motif est formé de bandes parallèles.

6. Dispositif suivant l'une des revendications de 1 à 5 **caractérisé en ce que** le au moins un motif est formé de bandes concentriques.

7. Dispositif suivant l'une quelconque des revendications précédentes **caractérisé en ce que** au moins une des images formées contient des informations codées.

8. Lecteur optique pour un document muni d'un dispositif suivant l'une quelconque des revendications précédentes **caractérisé en ce qu'**il comprend :
- une chambre,
- une source de rayonnement U.V., et/ou visible à forte intensité,
- un plan de référence disposé en regard de la source de rayonnement,
- des moyens de repérage de position,
- un système de détection optique sensible au rayonnement correspondant à la longueur d'onde émise par les pigments fluorescents ou photochromiques, comprenant au moins un détecteur optique disposé de façon à capter le dit rayonnement sous des angles appropriés lorsqu'un support muni du dispositif est placé en position adéquate dans le plan de référence.

9. Procédé d'authentification de document **caractérisé en ce qu'**il comprend les opérations suivantes :
- élaborer au moins deux motifs,
- partager ces au moins deux motifs en bandes suivant un pas déterminé,
- imprimer en alternance des bandes formant ces au moins deux motifs sur un support à l'aide d'encres contenant des pigments fluorescents et/ou photochromiques,
façonner une couche réticulée transparente au rayonnement activant ces pigments dotée d'un pas correspondant à celui des bandes de ces au moins deux motifs,
- apposer la couche réticulée sur les au moins deux motifs de façon à laisser apparaître sous un rayonnement approprié, suivant l'angle d'observation, un seul de ces au moins deux motifs,
- soumettre le document ainsi traité à une source de rayonnement U.V et/ou de lumière visible à forte intensité,
- vérifier la présence distincte de ces au moins deux motifs.

10. Procédé suivant la revendication 9 **caractérisé en ce que** le façonnage de la couche réticulée est réalisé après apposition d'une couche d'un matériau polymère sur le support.

## Patentansprüche

1. Fälschungsverhinderungseinrichtung für Dokumente, die aufweist
- einen Träger,
- mindestens zwei Muster, die auf den Träger aufgebracht sind, wobei diese Muster in einem bestimmten Abstand in Bänder aufgeteilt sind, wobei die Bänder abwechselnd nebeneinander angeordnet sind,
- eine vernetzte transparente Schicht mit einem Gitterabstand, der dem vorhergehenden Abstand entspricht, die auf diese mindestens zwei Muster aufgebracht wird, von einer solchen Form, dass sie je nach dem Betrachtungswinkel ein einziges dieser mindestens zwei Muster erscheinen lässt,
**dadurch gekennzeichnet, dass**
- die zur Herstellung dieser mindestens zwei Muster verwendeten Tinten fluoreszente oder photochrome Pigmente enthalten,
- die vernetzte Schicht für die diese Pigmente aktivierende Strahlung durchlässig ist,
- wenn die Einrichtung einer UV-Strahlung oder einer sichtbaren Strahlung großer Intensität ausgesetzt wird, diese mindestens zwei Muster unter mindestens zwei verschiedenen Blickwinkeln durch ihre Form, Abmessung und/oder Farbe unterschiedliche Bilder ergeben.

2. Fälschungsverhinderungseinrichtung nach Anspruch 1, **dadurch gekennzeichnet, dass** die Außenfläche der vernetzten transparenten Schicht Reliefs mit prismatischem Querschnitt aufweist.

3. Fälschungsverhinderungseinrichtung nach Anspruch 1, **dadurch gekennzeichnet, dass** die Außenfläche der Schicht Reliefs mit linsenförmigem Querschnitt aufweist.

4. Fälschungsverhinderungseinrichtung nach den Ansprüchen 1 und 2, **dadurch gekennzeichnet, dass** die Form der vernetzten Schicht durch Heißprägen erhalten wird.

5. Einrichtung nach einem der vorhergehenden Ansprüche, **dadurch gekennzeichnet, dass** das mindestens eine Muster von parallelen Bändern gebildet wird.

6. Einrichtung nach einem der Ansprüche 1 bis 5, **dadurch gekennzeichnet, dass** das mindestens eine Muster von konzentrischen Bändern gebildet wird.

7. Einrichtung nach einem der vorhergehenden Ansprüche, **dadurch gekennzeichnet, dass** mindestens eines der geformten Bilder codierte Informationen enthält.

8. Optisches Lesegerät für ein mit einer Einrichtung gemäß einem der vorhergehenden Ansprüche versehenes Dokument, **dadurch gekennzeichnet, dass** es aufweist
- eine Kammer,
- eine Quelle einer UV-Strahlung und/oder einer sichtbaren Strahlung großer Intensität,
- eine Bezugsebene, die vor der Strahlungsquelle angeordnet ist,
- Mittel zur Positionskennzeichnung,
- ein optisches Erfassungssystem, das für die Strahlung entsprechend der Wellenlänge empfindlich ist, die von den fluoreszenten oder photochromen Pigmenten ausgegeben wird, mit mindestens einem optischen Detektor, der so angeordnet ist, dass er die Strahlung unter geeigneten Winkeln auffängt, wenn ein mit der Einrichtung versehener Träger in der entsprechenden Position in der Bezugsebene angeordnet ist.

9. Verfahren zur Dokument-Echtheitsprüfung, **dadurch gekennzeichnet, dass** es die folgenden Arbeitsgänge aufweist:
- Erarbeiten von mindestens zwei Mustern,
- Aufteilen dieser mindestens zwei Muster in Bänder gemäß einem bestimmten Abstand,
- abwechselndes Drucken der diese mindestens zwei Muster bildenden Bänder auf einen Träger mit Hilfe von Tinten, die fluoreszente und/oder photochrome Pigmente enthalten,
- Formen einer für die diese Pigmente aktivierende Strahlung durchlässigen vernetzten Schicht, die mit einem Gitterabstand versehen ist, der demjenigen der Bänder dieser mindestens zwei Muster entspricht,
- Aufbringen der vernetzten Schicht auf die mindestens zwei Muster derart, dass unter einer entsprechenden Strahlung je nach dem Betrachtungswinkel nur eines dieser mindestens zwei Muster erscheint,
- Aussetzen des so bearbeiteten Dokuments einer Quelle von UV-Strahlung und/oder von sichtbarem Licht hoher Intensität,
- Überprüfen des getrennten Vorhandenseins dieser mindestens zwei Muster.

10. Verfahren nach Anspruch 9, **dadurch gekennzeichnet, dass** das Formen der vernetzten Schicht nach dem Aufbringen einer Schicht aus einem Polymermaterial auf den Träger erfolgt.

## Claims

1. Anti-fraud device for documents, comprising :
- a medium ;
- at least two patterns affixed to the said medium, these patterns being divided into stripes with a defined period, the said stripes being placed alternately side by side, and
- a crosslinked transparent film, having a period corresponding to the previous one, which film is affixed to these at least two patterns and has a shape such that it reveals, depending on the angle of viewing, only one of these at least two patterns,
**characterized in that** :
- the inks used to produce these at least two patterns contain fluorescent or photochromic pigments;
- the crosslinked film is transparent to the radiation that activates these pigments; and
- when the device is exposed to high-intensity UV or visible radiation, these at least two patterns give, when viewed at at least two different angles, dissimilar images differing by shape, dimensions and/or colour.

2. Anti-fraud device according to Claim 1, **characterized in that** the external surface of the crosslinked transparent film exhibits raised features of prismatic cross section.

3. Anti-fraud device according to Claim 1, **characterized in that** the external surface of the film exhibits raised features of lenticular cross section.

4. Anti-fraud device according to Claims 1 and 2, **characterized in that** the shape of the crosslinked film is obtained by hot stamping.

5. Device according to any one of the preceding claims, **characterized in that** the at least one pattern is formed from parallel stripes.

6. Device according to one of Claims 1 to 5, **characterized in that** the at least one pattern is formed from concentric stripes.

7. Device according to any one of the preceding claims, **characterized in that** at least one of the images formed contains coded information.

8. Optical reader for a document provided with a device according to any one of the preceding claims, **characterized in that** it comprises:
- a chamber;
- a source of high-intensity UV and/or visible radiation;
- a reference plane placed facing the radiation source;
- position registration means; and
- an optical detection system sensitive to the radiation corresponding to the wavelength emitted by the fluorescent or photochromic pigments, comprising at least one optical detector placed so as to pick up the said radiation at appropriate angles when a medium provided with the device is placed in a suitable position in the reference plane.

9. Method of authenticating a document, **characterized in that** it comprises the following operations:
- at least two patterns are generated;
- these at least two patterns are divided into stripes with a defined period;
- the stripes forming these at least two patterns on a medium are alternately printed using inks containing fluorescent and/or photochromic pigments;
- a crosslinked film, transparent to the radiation that activates these pigments and provided with a period corresponding to that of the stripes of these at least two patterns, is fashioned;
- the crosslinked film is affixed to the at least two patterns so as to reveal, under suitable radiation, depending on the viewing angle, only one of these at least two patterns;
- the document thus treated is exposed to a source of high-intensity UV and/or visible light radiation; and
- the separate presence of these at least two patterns is verified.

10. Method according to Claim 9, **characterized in that** the crosslinked film is fashioned after a film of a polymer material is affixed to the medium.
